# EUROPEAN PATENT APPLICATION

(11) **EP 3 226 610 A1**
(43) Date of publication of application: **04.10.2017**
(21) Application number: 16204261.8
(22) Date of filing: 15.12.2016
(51) Int. Cl.: H04W 36/00, H04W 36/02, H04W 88/18

(54) **HANDOVER METHOD USED BY NETWORK CONTROLLER OF TRANSPORT NETWORK AND NETWORK CONTROLLER USING THE SAME**

(30) Priority: 01.04.2016 US 201662316592 P; 09.12.2016 US 201615373479
(71) Applicant: Industrial Technology Research Institute, Chutung, Hsinchu 31040 (TW)
(72) Inventor: Chang, Hsien-Wen, Hsinchu City 300 (TW); Lai, Chia-Lin, Tainan City 701 (TW); Samer, T. Talat, Hsinchu City 300 (TW); Shahzoob, Bilal Chundrigar, Hsinchu City 300 (TW)
(74) Representative: Becker Kurig Straus

(57) **Abstract**

Accordingly, the disclosure provides a handover optimization method used by a network controller of a transport network and a network controller using the same method. According to one of the exemplary embodiments, the handover optimization method used by the network controller would include not limited to receiving a first data packet which includes not limited to a handover request acknowledgment; transmitting, before receiving a handover execution complete notification which corresponds to the handover request acknowledgement, a second data packet which includes not limited to a user-plane update notification in response to receiving the handover request acknowledgment; and transmitting a third data packet which includes not limited to a user-plane update complete in response to transmitting the user-plane update notification

## Description

### TECHNICAL FIELD

The disclosure is related to a handover method used by a network controller of a transport network and a network controller using the same method.

### BACKGROUND

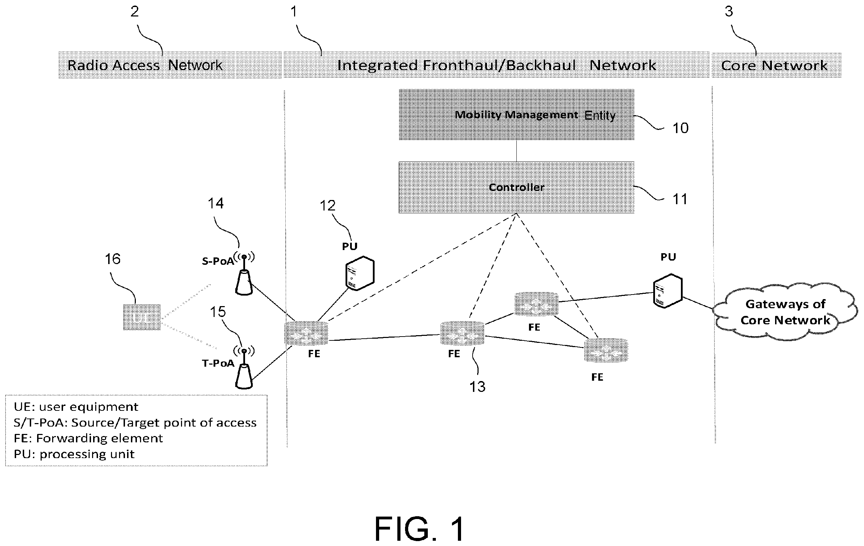

As foreseen in 5G, the transport network is evolving toward integrated fronthaul/backhaul network architecture which is more efficient in collecting and processing routing information as well as utilizing edge network processing. FIG. 1 illustrates a communication network which would include not limited to an integrated fronthaul / backhaul network 1 which transports information between a radio access network (RAN) 2 and a core network (CN) 3. The integrated fronthaul/backhaul network architecture may include not limited to a mobility management entity (MME) 10, a network controller 11, one or more processing units (PUs) 12, and one or more forwarding elements (FEs) 13. For instance, one of the FEs 13 may connect to multiple point of accesses (e.g. 14, 15) of the radio access network (RAN) 2 which provides wireless service to a user equipment (UE) 16. During a handover procedure, the source point of access (S-PoA) 14 may handover the wireless service to the target of PoA (T-PoA) 15. The S-PoA 14 could be a source eNB (SeNB) in a Long Term Evolution (LTE) communication system. The T-PoA 15 could be a target eNB (TeNB). The information to be transmitted from the UE 16 and to be destined toward the core network could be delivered through the FEs 13 which are controlled by the processing units 12. Together, these FEs 13 and PUs 12 can route data traffic from the RAN 2 to the CN 3 and also from the CN 3 to the RAN 2 according to commands from the network controller 11. The integrated fronthaul/backhaul network architecture 1 has higher efficiency in collecting and processing routing information as well as utilizing edge network processing than previous transport architecture.

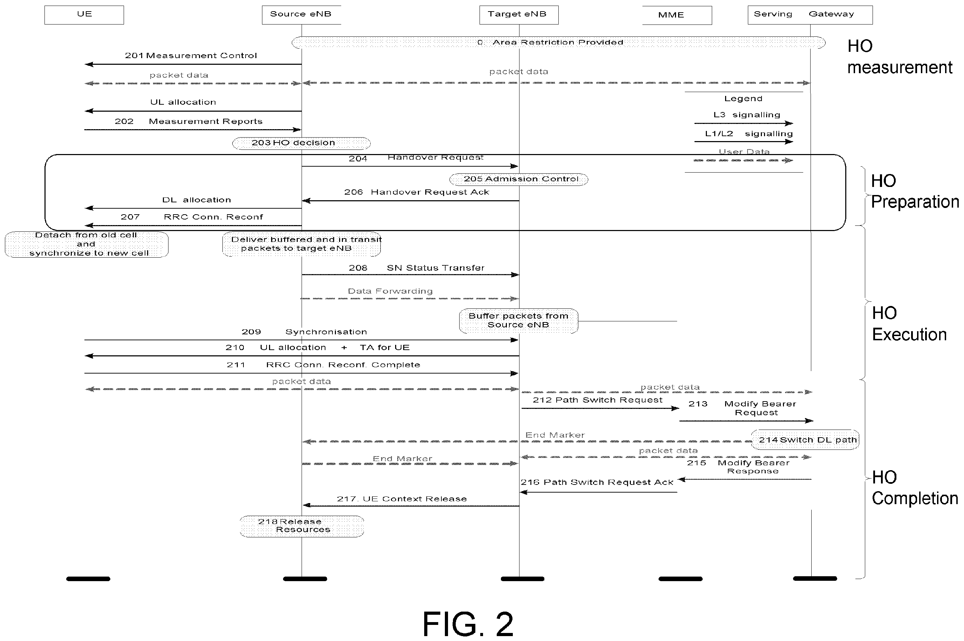

FIG. 2 illustrates a signaling diagram of a X2-based handover process based on 3GPP TS 36.300 V13.4.0 which is incorporated by reference. As shown in FIG. 2, the X2-based handover process may include not limited to a handover (HO) measurement stage, a HO preparation stage, a HO execution stage, and a HO completion stage. It is worth noting that each of these stages follow this particular sequence as illustrated in FIG. 2 as once the HO measurement stage has triggered a handover process, subsequent stages would not commence unless a previous stage has been completed.

During the HO measurement stage, a source eNB would determine whether to handover the UE to a target eNB. In step 201, the source eNB would send a Measurement Control signal to the UE in order to configure the UE measurement procedures according to, for example, an area restriction information. In step 202, the UE would, based on the Measurement Control signal, conduct channel measurements and subsequently transmits a Measurement Report to the source eNB. In step 203, the source eNB would perform Handover decision by determining whether to handover the UE to the target eNB based on the measurement report received in step 202.

Assuming that step 203 has triggered a handover procedure, in step 204 the source eNB would transmit a Handover Request to the target eNB for the purpose of inquiring the feasibility of handing over the UE to the target eNB. In step 205, the target eNB would performs an Admission Control procedure so as to determine the feasibility of such handover. The Admission Control procedure may determine whether a successful handover would likely occur based on, for example, quality of service (QoS) information. In step 206, the target eNB would transmit a Handover Request Acknowledgment to the source eNB in order to inform the source eNB whether the Handover Request has been granted. Assuming that the Handover Request has been granted, in step 207, the source eNB would transmit a radio resource control (RRC) Connection Reconfiguration message with necessary parameters such as new Cell Radio Network Temporary Identifier (C-RNTI), the target eNB security algorithm identifiers, optionally dedicated random access channel (RACH) preamble, optionally target eNB system information block (SIB), and so forth, in order to command the UE to start the handover procedure. At this point, the source eNB would also deliver buffered and in transmit packet to the target eNB, and the UE would detach from the source eNB and would attempt to attach to the target eNB.

For the HO execution stage, in step 208 the source eNB would transmit a SN Status Transfer message to the target eNB to convey the uplink PDCP SN receiver status and the downlink PDCP SN transmitter status of E-RABs for which PDCP status preservation applies. In step 209, the UE would synchronize to the target eNB in order to access the new cell via RACH. In step 210, in response to the synchronization, in step 210, the target eNB would respond by transmitting an uplink (UL) allocation and timing advance (TA) information to the UE. In step 211, the UE would transmit a RRC Connection Reconfiguration Complete message which may include not limited to a C-RNTI to the target eNB to confirm the handover to the target eNB so as to indicate to the target eNB that the handover procedure has been completed. After the target eNB verifies the received the C-RNTI embedded within the RRC Connection Reconfiguration Complete message. The target eNB may at this point transmitting and receiving user data from the UE.

For the HO completion stage, in step 212, the target eNB would transmit a Path Switch Request to the MME in order to inform the MME that the UE has switched to a new cell. In response to receiving the Path Switch Request, in step 213, the MME would transmit a Modify Bearer Request to a Serving Gateway. In step 214, the serving gateway would switch the downlink (DL) path to the target eNB and subsequently transmits one or more end marker packets to the source eNB so as to release resources toward the source eNB. In step 215, the serving gateway would transmit a Modify Bearer Response to the MME. In step 216, in response to receiving the Modify Bearer Response from the serving gateway, the MME would respond by transmitting a Path Switch Request Acknowledgement to the target eNB in step 216. In step 217, the target eNB would transmit a UE Context Release message to the source eNB. By sending UE Context Release message, the target eNB would inform the success of the HO to source eNB and consequently trigger the release of resources by the source eNB. In step 218, upon the reception of the UE Context Release message, the source eNB would release radio and C-plane related resources associated with the UE context.

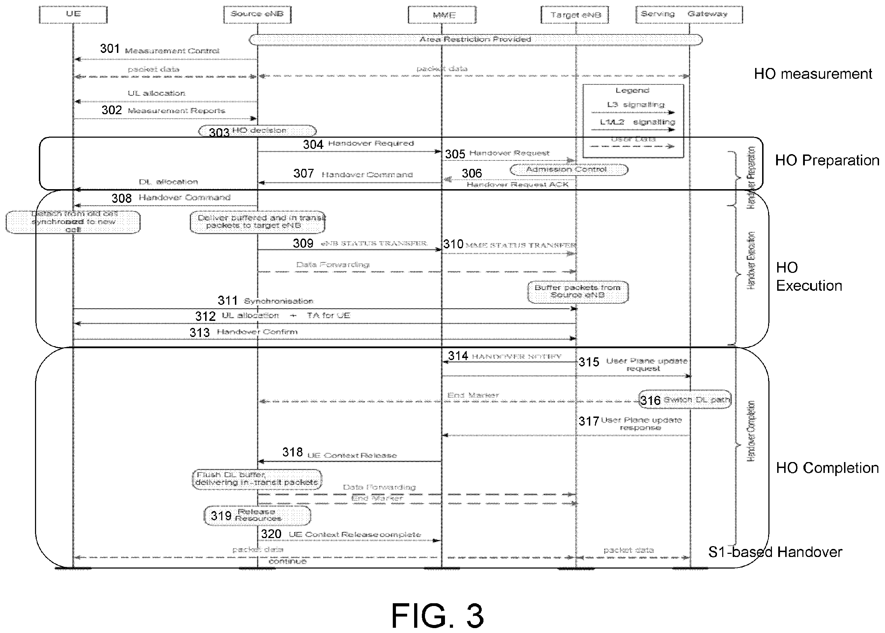

Please refer to FIG. 3, FIG. 3 illustrates a signaling diagram of S1-based handover based on 3GPP TS 36.300 V13.4.0 which is incorporated by reference. As shown in FIG. 3, the S1-based handover process may include not limited to a handover (HO) measurement stage, a HO preparation stage, a HO execution stage, and a HO completion stage.

During the HO measurement stage, a source eNB would determine whether to handover the UE to a target eNB. In step 301, the source eNB would send a Measurement Control signal to the UE in order to configure the UE measurement procedures according to, for example, an area restriction information. In Step 302, the UE would, based on the Measurement Control signal, conduct channel measurements and subsequently transmits a Measurement Report to the source eNB. In step 303, the source eNB would perform Handover decision by determining whether to handover the UE to the target eNB based on the measurement report received in step 302.

Assuming that step 303 has triggered a handover procedure, in step 304 the source eNB would transmit a Handover Request to the MME to inquire the target eNB the feasibility of handing over the UE to the target eNB. In step 305, the MME would forward the handover request to the target eNB. After the target eNB has performed an Admission Control procedure so as to determine the feasibility of such handover, in step 306, the target eNB would transmit a Handover Request Acknowledgment to the source eNB through the MME in order to inform the source eNB whether the Handover Request has been granted. In step 307, in response to receiving the Handover Request Acknowledgment, the MME would transmit a Handover Command to the source eNB. Assuming that the Handover Request has been granted, in step 308, the source eNB would transmit a radio resource control (RRC) Connection Reconfiguration message with necessary parameters such as new Cell Radio Network Temporary Identifier

(C-RNTI), the target eNB security algorithm identifiers, optionally dedicated random access channel (RACH) preamble, optionally target eNB system information block (SIB), and so forth, in order to command the UE to start the handover procedure. At this point, the source eNB would also deliver buffered and in transmit packet to the target eNB, and the UE would detach from the source eNB and would attempt to attach to the target eNB.

For the HO execution stage, in step 309 the source eNB would transmit an eNB Status Transfer message to the target eNB to convey the uplink PDCP SN receiver status and the downlink PDCP SN transmitter status of E-RABs for which PDCP status preservation applies. In step 310, the MME would forward the eNB Status Transfer message by transmitting a MME Status Transfer message. In step 311, the UE would synchronize to the target eNB in order to access the new cell via RACH. In step 312, in response to the synchronization, the target eNB would respond by transmitting an uplink (UL) allocation and timing advance (TA) information to the UE. In step 313, the UE would transmit a Handover Confirm message to the target eNB to confirm the handover to the target eNB so as to indicate to the target eNB that the handover procedure has been completed. Subsequently, the target eNB may at this point transmitting and receiving user data from the UE.

For the HO completion stage, in step 314, the target eNB would transmit a Handover Notify message to the MME in order to inform the MME that the UE has switched to a new cell. In step 315, the MME would transmit to the Serving Gateway a User Plane Update Request message. In step 316, the serving gateway would switch the downlink (DL) path to the target eNB and subsequently transmits one or more end marker packets to the source eNB so as to release resources toward the source eNB. In step 317, the serving gateway would transmit an User Plane Update Response message to the MME. In step 318, the MME would transmit a UE Context Release message to the source eNB. In step 319, the source eNB would release related resources associated with the UE context. In step 320, the source eNB would transmit a UE Context Release Complete message to the MME.

It is worth noting that for the conventional X2-based handover procedure as described in FIG. 2 and S1-based handover procedure as described in FIG. 3, the X2-based handover procedure typically follows steps 201 ∼ 218 according to this particular order, and the S1-based handover procedure typically follows steps 301 ∼ 320 in this particular order. Therefore, the HO measurement stage, the HO preparation stage, the HO execution stage, and the HO completion stage have to follow the particular order as described. However, since both the X2-based handover procedure and the S1-based handover procedure require a particular order, the aforementioned stages cannot be performed in a parallel manner.

### SUMMARY

The invention is defined in the independent claims. The dependent claims define preferred embodiments. Accordingly, the disclosure provides a handover optimization method used by a network controller of a transport network and a network controller using the same method.

Preferably, the disclosure provides a handover optimization method used by a network controller of a transport network. The method would include not limited to: receiving a handover request acknowledgment; transmitting, before receiving a handover execution complete notification message which correspond to the handover request acknowledgement, a user-plane update notification in response to receiving the handover request acknowledgment; and transmitting a user-plane update complete notification after transmitting the user-plane update notification.

Preferably, the disclosure provides a network controller which could be a part of a transport network. The network controller would include not limited to a transmitter, a receiver, and a processor coupled to the transmitter and the receiver. The processor is configured at least to: receive, by the receiver, a handover request acknowledgment; transmit, by the transmitter and before receiving a handover execution complete notification message which corresponds to the handover request acknowledgement, a user-plane update notification in response to receiving the handover request acknowledgment; and transmit, via the transmitter, a user-plane update complete after transmitting the user-plane update notification.

In order to make the aforementioned features and advantages of the present disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the present disclosure and is therefore not meant to be limiting or restrictive in any manner. Also the present disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 illustrates a communication network which includes an integrated fronthaul/backhaul transport network that delivers data between a radio access network and a core network.
FIG. 2 illustrates a signaling diagram of a X2-based handover procedure according to 3GPP TS 36.300 V13.4.0.
FIG. 3 illustrates a signaling diagram of a S1-based handover procedure according to 3GPP TS 36.300 V13.4.0.
FIG. 4 illustrates a conventional handover method relative to a proposed handover optimization method used by a network controller of a transport network in accordance with one of the exemplary embodiments of the disclosure.
FIG. 5 illustrates an overview of the proposed handover optimization method used by a network controller of a transport network in accordance with one of the exemplary embodiments of the disclosure.
FIG. 6 illustrates the proposed handover optimization method which is X2-based in accordance with one of the exemplary embodiments of the disclosure.
FIG. 7 illustrates the proposed handover optimization method which is X2-based in the event of a handover failure in accordance with one of the exemplary embodiments of the disclosure.
FIG. 8 illustrates the proposed handover optimization method which is S1-based in accordance with one of the exemplary embodiments of the disclosure.
FIG. 9 illustrates the proposed handover optimization method which is S1-based in the event of a handover failure in accordance with one of the exemplary embodiments of the disclosure.
FIG. 10 illustrates the proposed handover optimization method which is X2-based executed by a network controller integrated within an enhanced eNB in accordance with one of the exemplary embodiments of the disclosure.
FIG. 11 illustrates a handover algorithm for the proposed handover optimization method in accordance with one of the exemplary embodiments of the disclosure.
FIG. 12 illustrates a MMA handover algorithm in accordance with one of the exemplary embodiments of the disclosure.
FIG. 13 illustrates a summary of the proposed handover optimization method in accordance with one of the exemplary embodiments of the disclosure.
FIG. 14 illustrates the hardware of a network controller in terms of functional block diagrams in accordance with one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

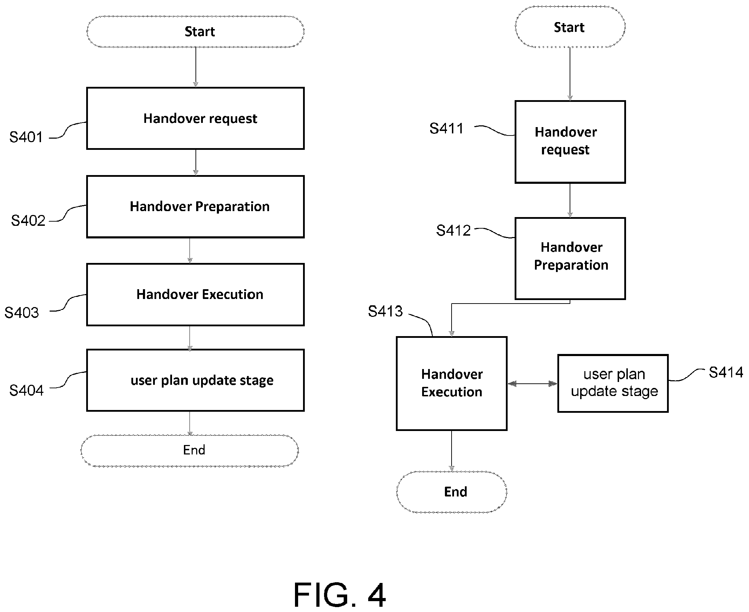

FIG. 4 illustrates a conventional handover method relative to a proposed handover optimization method used by a network controller of a transport network in accordance with one of the exemplary embodiments of the disclosure. As previously shown in FIG. 2 and FIG. 3, the current handover process has at least four stages which include the handover request stage S401, the handover preparation stage S402, the handover execution stage S403, and the user plan update stage S404 (i.e. handover completion stage in the LTE standard). The details of each of the stages have been described in FIG. 2, FIG. 3, and their corresponding written descriptions.

In general, when a handover process has been initiated during the handover request stage S401, the current network architecture has limited possibilities to optimize the handover timing due to the limitation of the conventional transport network. However, with integrated fronthaul / backhaul transport network 1 as a transport network architecture, the handover execution and the user-plane update could be processed simultaneously between RAN and CN to optimize handover timings. As shown in FIG. 4, subsequent to the handover request stage S411 and the handover preparation stage S412, the timing of the handover execution stage S413 could parallel with the user plan update stage S414. In addition, the mobility management entity 10 which controls the network controller 11 may determine the best proactive routing path while being offline and reduce the handover completion time by making the handover execution stage S413 and the user plan update stage S414 transpire simultaneously.

Thus, the proposed disclosure also aims to decrease the handover time by performing different stages simultaneously. Further, the disclosure calculates routing paths by using over the edge network units in advance so that, whenever a handover has been initiated, the edge network units may utilize new computed proactive routing paths to minimize the signaling. The integrated fronthaul/backhaul network, as shown in FIG. 1, which is the network between RAN (or point-of-access, PoA) and CN could be implemented based on software defined network (SDN). The packets from RAN could be transmitted among the FEs 13 and processing units (PUs) 12. A PU 12 could perform signal processing functionalities and used as baseband unit (BBU) or as mobility management entity (MME). The centralized network controller 11 could control packet forwarding rules and, with applications installed above the centralized controller, give intelligent computing to command the centralized network controller 11 for various types of network services, such as mobility management application (MMA).

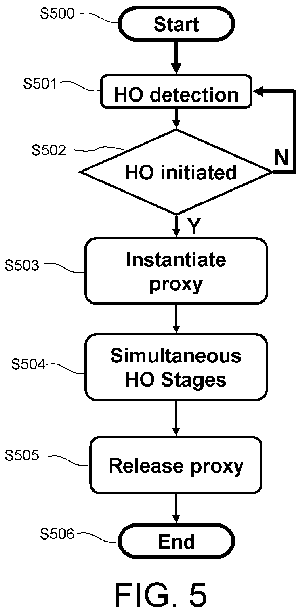

FIG. 5 illustrates an overview of the proposed handover optimization method from the perspective of a network controller 11 of a transport network 1. In step S501, the network controller 11 perform handover detection by analyzing data packets forwarded by FEs to the network controller 11 for analysis. The analysis could either be performed constantly or in a context-aware basis. In step S502, the network controller 11 determines whether a handover process has been initiated. If so, step S503 would be executed; otherwise, handover detections in step S501 would still be performed. In step S503, the network controller 11 would instantiate a proxy. In step S504, the proxy would facilitate simultaneous handover stages, namely, the handover execution stage S413 and the user-plan update stage S414. Simultaneous stages in this disclosure does not necessarily mean that two stages would be performed exactly at the same time but would be performed in parallel. In step S505, the proxy would be released when the handover execution stage S413 and the user plan update stage S414 have been completed or when the handover has failed as the target eNB could be unable to service additional UEs. The proxy would be established for the network controller 11 to communicate with the eNBs and core network on behalf of the core network and the eNBs, respectively. By establishing the proxy, different HO stages as described in steps S401 ∼ S404 which would previously need to occur in sequence could be made to occur simultaneously as shown in step S413 and step S414.

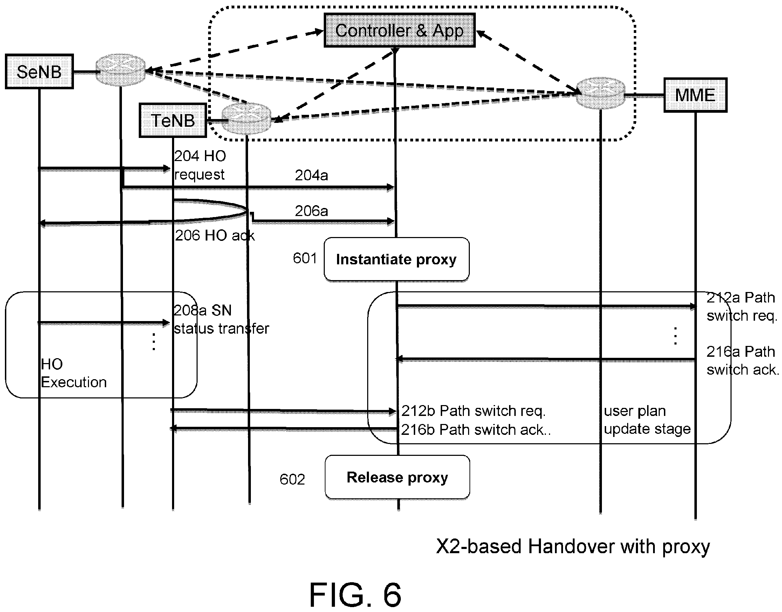

FIG. 6 illustrates the proposed handover optimization method which is X2-based in accordance with one of the exemplary embodiments of the disclosure. Assuming that step 204 of FIG. 2 has occurred as during which the SeNB has transmitted a data packet which includes a handover request to the TeNB in order to initiate a handover process. In step 204a, the same data packet would be forward to the network controller 11 to be analyzed. Upon detecting the handover request received from the data packet originated from the SeNB, in step 601 the network controller 11 would instantiate a proxy. The proxy is established for the network controller 11 to communicate on behalf of the CN and eNBs (e.g. SeNB, TeNB, etc.). Also, it is assumed that step 206 of FIG. 2 has also occurred as the TeNB has received the handover request and subsequently transmitted a data packet which includes a handover request acknowledgement to the SeNB, and thus in step 206a, the same data packet having the handover request acknowledgement of step 206 would also be transmitted to the network controller 11. Upon obtaining the handover request of step 204a as well as the handover request acknowledgement of step 206a, the network controller 11 would instantiate or establish the proxy in step 601.

In response to receiving the handover request acknowledgement, in step 212a, the proxy would transmit a data packet which includes a Path Switch Request message (also referred to as a first Path Switch Request message) to the MME on behalf of the TeNB. For the step 212a, the Path Switch Request message within the data packet would be the same as the Path Switch Request message in step 212 of FIG. 2. However, in response to receiving the handover request acknowledgment of step 206a, the network controller 11 does not have to wait for the completion of the handover execution stage but rather the network controller 11 would use the proxy to transmit the Path Switch Request message on behalf of the TeNB before the RRC Connection Reconfiguration Complete message of step 211 has been received by the TeNB from the UE which is in the process of being handed over from the SeNB to the TeNB.

After transmitting the Path Switch Request message of step 212a, the proxy could in step 216a receive a Path Switch Acknowledgment message (also referred to as a first Path Switch Acknowledgement message) on behalf of the TeNB of the RAN. Subsequently, the proxy could in step 212b receive a Path Switch Request message (also referred to as a second Path Switch Request message) which is transmitted from the TeNB destined toward the MME, and the Path Switch Request message of step 212b is the same as the Path Switch Request message of step 212 of FIG. 2. Conventionally, the transport network would forward the Path Switch Request message for the TeNB to the MME. However, for this exemplary embodiment, the Path Switch Request message has been transmitted in advance in order to accelerate the handover process by allowing the handover execution stage and the user plan update stage to transpire simultaneously. In response to receiving the Path Switch Request message of step 212b from the TeNB, in step 216b, the proxy would transmit a Path Switch Acknowledgment (also referred to as a second Path Switch Acknowledgement message) on behalf of the MME of the CN. In step 602, the network controller 11 would release the proxy.

Based on FIG. 6, it can be seen that while the SN status transfer message of step 208a of the handover execution stage is being executed, the user plan update stage could be processed in parallel and does not have to wait for the conclusion of the handover execution stage. Therefore, the proposed handover optimization method is more efficient than conventional X2 based handover methods as shown in FIG. 2.

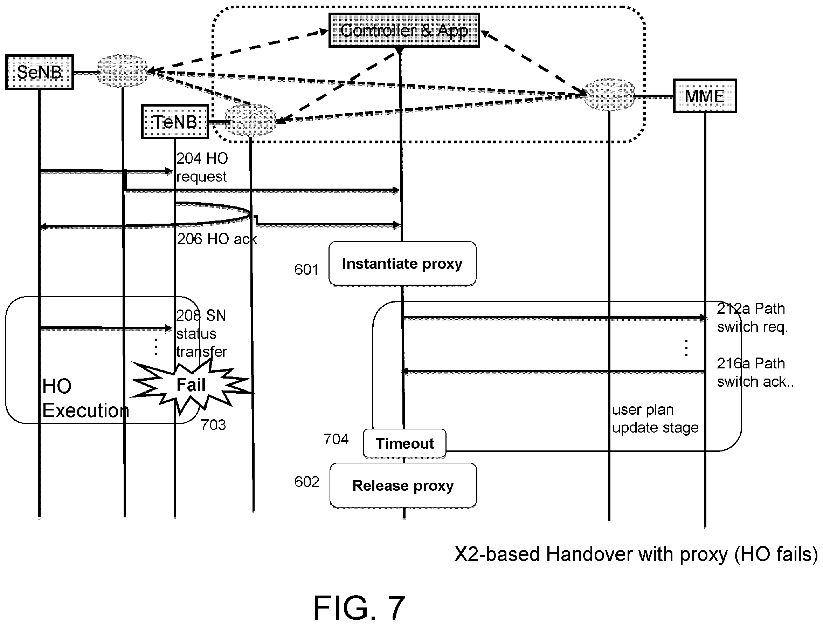

FIG. 7 illustrates the proposed handover optimization method which is X2-based in the event of a handover failure in accordance with one of the exemplary embodiments of the disclosure. The procedure of this exemplary embodiment is similar to FIG. 6. However, in the event that the proxy does not receive the Path Switch Request message in step 212b after the Path Switch Request message has been forwarded in step 212a and the Path Switch Acknowledgment message has been received in step 216a, it is possible that the handover process from the SeNB to the TeNB has not been successful. After receiving the Path Switch Acknowledgment message of step 216a, the network controller 11 could wait for a predetermined period to receive the Path Switch Request message 212b from the TeNB. After the predetermined period has expired, then the network controller 11 in step 703 would assume that the handover process has not been successful. Subsequently, in step 704, the proxy of network controller 11 would stop the handover procedure and not transmit the Path Switch Acknowledgment message 216b to the TeNB on behalf of the MME. After the step 704, the network controller 11 would release the proxy which is the same as step 602.

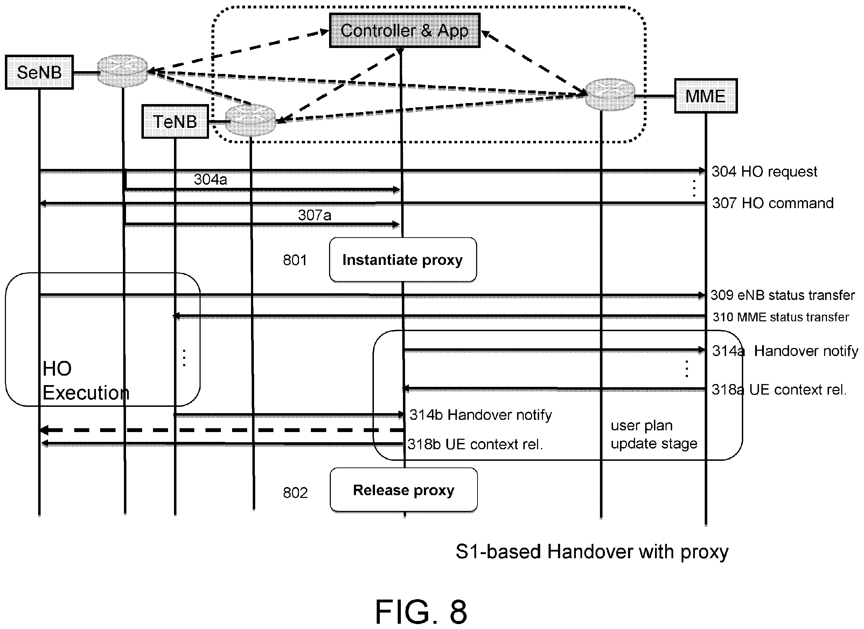

FIG. 8 illustrates the proposed handover optimization method which is S1-based in accordance with one of the exemplary embodiments of the disclosure. Assuming the SeNB has initiated a handover by transmitting a data packet which includes Handover Required Message which is the same as the Handover Required message of step 304 of FIG. 3, in step 304a, the network controller 11 would detect the Handover Request message by analyzing the same data packet in which the Handover Request message is embedded in. In response to transmitting the Handover Request Message of step 304, the SeNB would receive a data packet which includes the Handover Command message which is the same as step 307 of FIG. 3. However, in step 307a, the Handover Command message would also be received by the network controller 11 by analyzing the same data packet in which the Handover Command message is embedded in. After detecting the Handover Request Message of step 304a and the Handover Command message of step 307a, in step 801, the network controller would instantiate a proxy which serves similar purposes as the exemplary embodiment of FIG. 6 and FIG. 7. Subsequently the handover execution stage would commence as the SeNB would transmit an eNB status transfer message to the MME as previously described in step 309, and the TeNB would receive a MME status transfer message from the MME as previously described in step 310.

However, before the handover execution stage is completed such as when the TeNB receiving the Handover Confirm message of step 313, the proxy would in step 314a transmit a Handover Notify message to the MME on behalf of the TeNB. The Handover Notify message of step 314a is the same as the Handover Notify message of step 314 of FIG. 3 except that the proxy would transmit this message on behalf of the TeNB before the TeNB would transmit this message to the MME. Conventionally, the Handover Notify message is transmitted from the TeNB to the MME. However, for the proposed method, the proxy would transmit the Handover Notify message to the MME on behalf of the TeNB ahead of the time during which the Handover Notify message is transmitted conventionally. In this way, the user plan update stage may begin without waiting for the conclusion of the handover execution stage.

In response to transmitting the Handover Notify message (also referred to as a first Handover Notify message) of step 314a, in step 318a, the proxy may receive a UE context release message from the MME. The UE context release message (also referred to as a first UE context release message) of step 318a would be the same as the UE context release message of step 318 of FIG. 3, but the message would be received by the proxy instead of the SeNB. Subsequently, in step 314b, the proxy may receive, from the TeNB, the Handover Notify message (also referred to as a second Handover Notify message) which is the same as the Handover Notify message of step 314 of FIG. 3. In response to receiving the Handover Notify message of step 314b from the TeNB, in step 318b, the proxy would transmit, to the SeNB, the UE context release message (also referred to as a second UE context release message) which is the same as the UE context release message of step 318. Subsequently, in step 802, the network controller 11 would release the proxy at the conclusion of the handover procedure.

Based on FIG. 8, it can be seen that while the the handover execution stage is being executed as the SeNB transmits the eNB status transfer message and the TeNB receives the MME status transfer message, the user plan update stage could be processed in parallel and does not have to wait for the conclusion of the handover execution stage. Therefore, the proposed handover optimization method is more efficient than conventional S1-based handover methods as shown in FIG. 3.

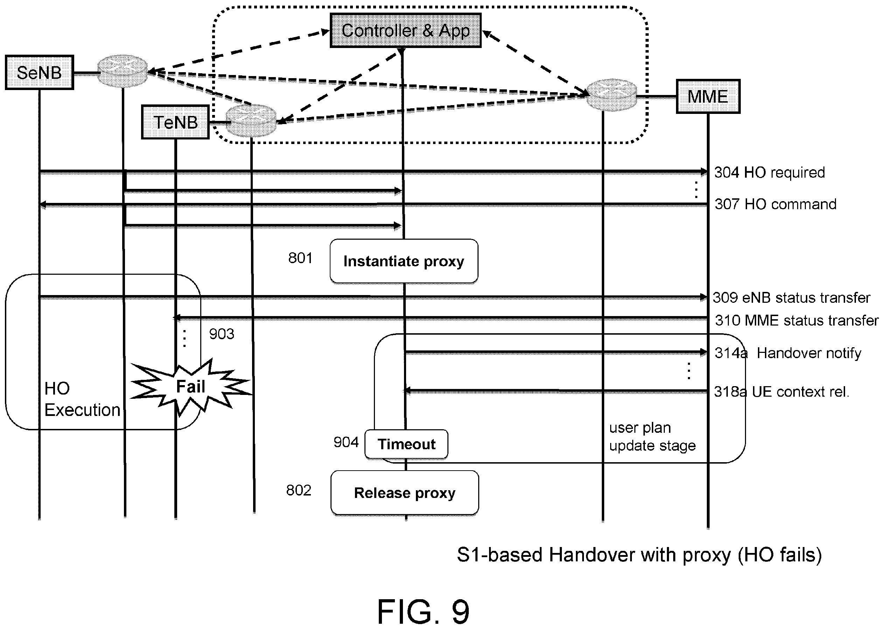

FIG. 9 illustrates the proposed handover optimization method which is S1-based in the event of a handover failure in accordance with one of the exemplary embodiments of the disclosure. The procedure of this exemplary embodiment is similar to FIG. 8. However, in response to receiving the UE context release message of step 318a from the MME, the proxy may start a timer and determine whether the Handover Notify message of step 314b is received from the TeNB. In the event that the proxy does not receive the Handover Notify message of step 314b which supposes to occur after a predetermined period, then it is possible that the handover process from the SeNB to the TeNB has not been successful. In that case, the proxy would assume the occurrence of step 903 during which the handover process from the SeNB to the TeNB has failed. In step 904, after the predetermined period has expired, the network controller would stop the handover process and not transmit the UE context release message to the SeNB on behalf of the MME. The network controller 11 would also execute step 802 by releasing the proxy.

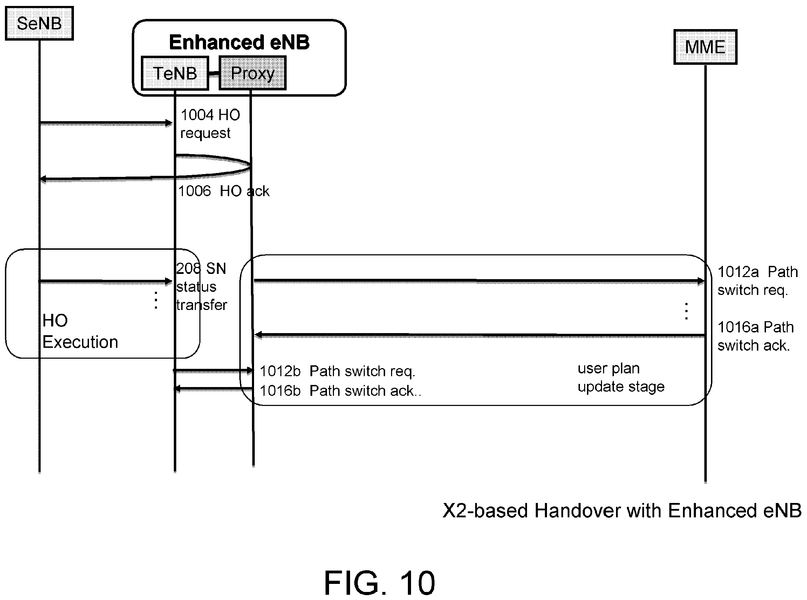

FIG. 10 illustrates the proposed handover optimization method which is X2-based executed by a controller integrated within an enhanced eNB in accordance with one of the exemplary embodiments of the disclosure. This exemplary embodiment is similar to the exemplary embodiment of FIG. 6 and FIG. 7. However, the network controller would be integrated within an enhanced eNB which could be the TeNB instead of being situated within a transport network and serving under the MME 10. Assuming that step 204 of FIG. 2 has occurred as during which the SeNB has transmitted a data packet which includes a handover request to the TeNB in order to initiate a handover process. In step 1004, The same data packet could also be received by the TeNB to be analyzed in order to detect for a handover request. Upon detecting the handover request received from the SeNB, the TeNB would instantiate an proxy. The proxy would receive the handover request from the SeNB and is established for the TeNB to communicate with the SeNB on behalf of the CN and to communicate with the CN on behalf of the SeNB. Also, it is assumed that the step 206 of FIG. 2 has also occurred as the TeNB transmits a data packet which includes handover acknowledgment to the SeNB, the same data packet would be forwarded to the proxy.

In response to transmitting the handover request acknowledgement, in step 1012a, the proxy would transmit a Path Switch Request message to the MME. For the step 1012a, the Path Switch Request message would be the same as the Path Switch Request message in step 212 of FIG. 2. However, in response to receiving the handover acknowledgment of step 1016a, the TeNB does not have to wait for the completion of the handover execution stage but rather the TeNB in step 1012b could transmit the Path Switch Request before receiving the RRC Connection Reconfiguration Complete message of step 211 from the UE which is in the process of being handed over from the SeNB to the TeNB.

After transmitting the Path Switch Request message of step 1012a, the proxy could in step 1016a would receive a Path Switch Acknowledgment message from the MME. Subsequently, the proxy could in step 1012b receive a Path Switch Request message which is from the TeNB destined toward the MME, and the Path Switch Request message of step 1012b is the same as the Path Switch Request message of step 212 of FIG. 2. In response to receiving the Path Switch Request message 1012b, the proxy would transmit a Path Switch Acknowledgment message 1016b to the TeNB. Subsequently, the TeNB would release the proxy. Since the operation of the proxy is t merged into the TeNB, it would be apparent for an ordinary person skilled in the art that the operation of the S1-based handover procedure of FIG. 8 would be applicable, and also the failure handlings of FIG. 7 and FIG. 9 would also be applicable.

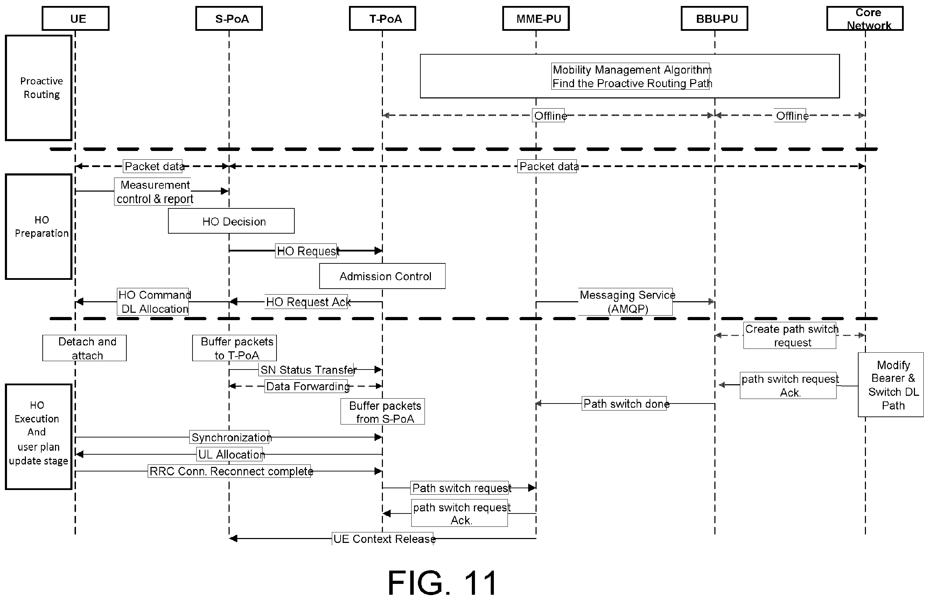

FIG. 11 illustrates a handover algorithm for the proposed handover optimization method in accordance with one of the exemplary embodiments of the disclosure. According to the location of source/target-POA (S/T-PoA) at a specific time, the proactive routes to the core network are provided from a set of routing paths, and the optimization of this routing is provided as part the MMA algorithm. Similar to aforementioned embodiments, the HO execution and user plan update can be performed at the same time, through the provisioning of BBU and MME functionalities in PUs. Messaging services (e.g., Advanced Message Queuing Protocol, AMPQ) can be further applied to accelerate the communications between PUs.

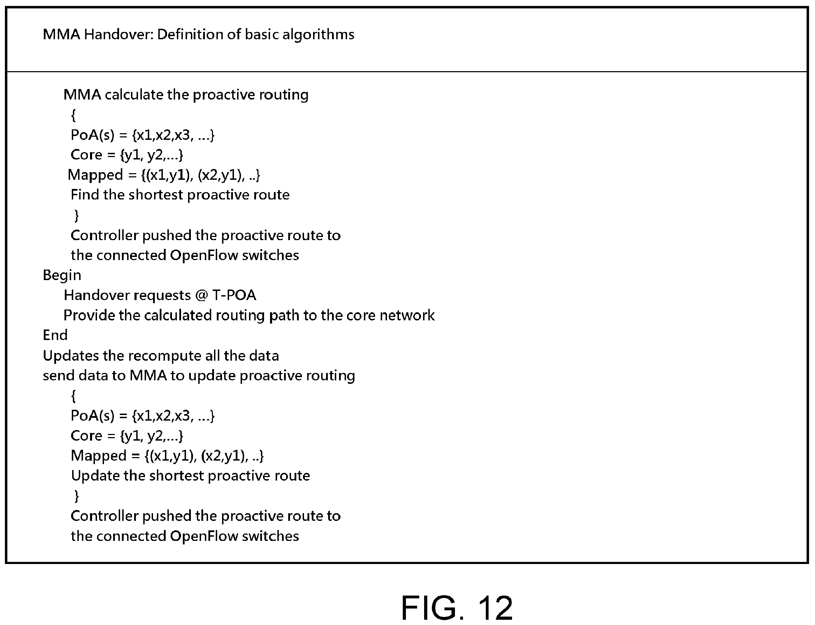

FIG. 12 illustrates a MMA proactive routing algorithm in accordance with one of the exemplary embodiments of the disclosure. The MMA algorithm is shown in Figure 6, and proactive routing algorithm starts before any handover request occurrence. Based on the deterministic trajectory, MMA first define the T-POA, then it calculates with the help of controller the proactive path between T-POA and the core network. As the handover request occurs, MMA will provide the calculated routing path to execute the whole handover process quickly. And then it updates the network data to re-compute the proactive routing for any future handover request.

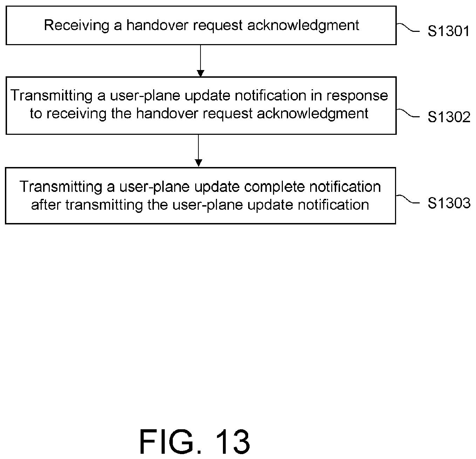

FIG. 13 illustrates a summary of the proposed handover optimization method used by a network controller in accordance with one of the exemplary embodiments of the disclosure. In step S1301, the network controller would receive a handover request acknowledgment (206a,304a,307a). In step S1302, the network controller would transmit, before receiving a handover execution complete notification message which corresponds to the handover request acknowledgement (206a,304a,307a), a user-plane update notification (212a, 314a) in response to receiving the handover request acknowledgment (206a,304a,307a). In step S1303, the network controller would transmit a user-plane update complete notification (216b, 318b) after transmitting the user-plane update notification (212a, 314a).

According to one of the exemplary embodiments, the network controller would establish a proxy (601,801) that receives the handover request acknowledgment (206a,304a,307a) so as to transmit the user-plane update notification (212a, 314a) before receiving the handover execution complete notification message and receives a user-plane update acknowledgement (216a, 318a) in response to transmitting the user-plane update notification (212a, 314a).

According to one of the exemplary embodiments, the user-plane update notification (212a, 314a) is transmitted during a user plan update stage which occurs before receiving, the handover execution complete notification (e.g., the connection reconfiguration message (211) or the handover confirm message (313)) that occurs during a handover execution stage. The user plan update stage and the handover execute stage may overlap partially in time.

According to one of the exemplary embodiments, the user-plane update notification could be a Path Switch Request message (212a) when the handover request acknowledgment is X2-based or a Handover Notify message (314a) when the handover request acknowledgment is S1-based. Similarly, the user-plane update complete notification could be the Path Switch Acknowledgement message (216b) when the handover request acknowledgment is X2-based or the UE context release message (318b) when the handover request acknowledgment is S1-based. Similarly, the handover execution complete notification message is either a radio resource control (RRC) Connection Reconfiguration Complete message (211) when the handover request acknowledgment is X2-based or a Handover Confirm message (313) when the handover request acknowledgment is S1-based.

According to one of the exemplary embodiments, the network controller may further determine whether the Path Switch Request message (212b) is received by the proxy before a predetermined period. The network controller may release the proxy in response to not receiving the Path Switch Request message (212b) within the predetermined period but would transmit a Path Switch Acknowledgement message (216b) in response to receiving the Path Switch Request message (212b) within the predetermined period.

According to one of the exemplary embodiments, the network controller may further receive a UE context release message(318a) in response to transmitting, by the proxy, the Handover Notification message (314a) and transmit, by the proxy, the UE context release message (318b).

According to one of the exemplary embodiments, the network controller may further determine whether a Handover Notify message(314b) is received by the proxy before a predetermined period. The network controller may release the proxy in response to not receiving the Handover Notify message (314b) within the predetermined period. The network controller may transmit, by the proxy, the UE context release (318b) message only if the Handover Notify (314b) message is received, by the proxy, within the predetermined period.

According to one of the exemplary embodiments, the network controller may receive a handover request message (204a) destined toward a network to initiate a handover procedure.

According to one of the exemplary embodiments, the aforementioned functions of the network controller could be is integrated within a macro cell base station.

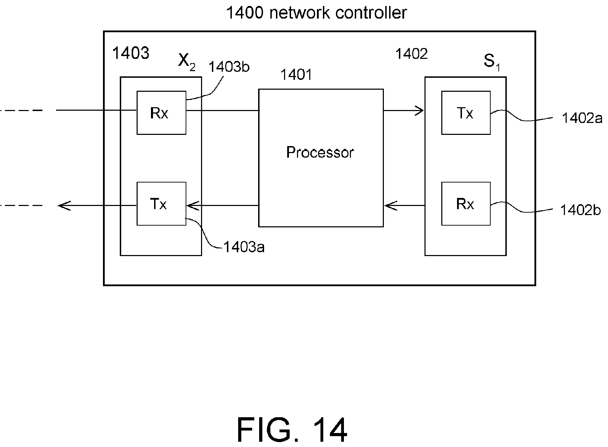

FIG. 14 illustrates the hardware of a network controller in terms of functional block diagrams in accordance with one of the exemplary embodiments of the disclosure. The network controller 1400 would include not limited to a processor 1401, a transmitter 1402, a receiver 1403. The transmitter 1402 and the receiver 1403 may include multiple transmitters 1402a, 1402b and receivers 1403a, 1403b for different frequencies and interfaces such as 3G frequency, S1 interface, and X2 interface. The processor is configured for executing functions related to the proposed handover optimization method of FIG. 13 and all aforementioned exemplary embodiments. The functions of the processor 1401 could be implemented by using one or more programmable units such as a micro-processor, a micro-controller, a DSP chips, FPGA, etc. The functions of the processor 1401 may also be implemented with separate electronic devices or ICs, and the functions performed by the processor 1401 may be implemented within the domain of either hardware or software.

In view of the aforementioned descriptions, the present disclosure is suitable for being used by a wireless communication system and is able to reduce the handover time of a UE being handed over from a source eNB to a target eNB by processing the handover execution stage and the user plan update stage in parallel such that the user plan update stage may commence without waiting for the conclusion of the handover execution stage.

## Claims

1. A handover optimization method used by a network controller (11) of a transport network, **characterized by** comprising:
receiving a handover request acknowledgment (206a, 304a, 307a);
transmitting, before receiving a handover execution complete notification message (211, 313) which correspond to the handover request acknowledgement (206a, 304a, 307a), a user-plane update notification (212a, 314a) in response to receiving the handover request acknowledgment (206a,304a,307a); and
transmitting a user-plane update complete notification (216b, 318b) after transmitting the user-plane update notification (212a, 314a).

2. The method of claim 1, **characterized in that** further comprising:
establishing a proxy that receives the handover request acknowledgment (206a, 304a, 307a) so as to transmit the user-plane update notification (212a, 314a) before receiving the handover execution complete notification message (211, 313) and receives a user-plane update acknowledgement (216a, 318a) in response to transmitting the user-plane update notification (212a, 314a).

3. The method of claim 2, **characterized in that** transmitting, before receiving the handover execution complete notification message (211, 313) which corresponds to the handover request acknowledgement (206a, 304a, 307a), the user-plane update notification (212a, 314a) comprising:
transmitting, by the proxy, the user-plane update notification (212a, 314a) during a user plan update stage before receiving, by the proxy, the handover execution complete notification message (211, 313) that occurs during a handover execution stage, wherein the user plan update stage and the handover execute stage overlaps partially in time.

4. The method of claim 1, **characterized in that** the user-plane update notification (212a, 314a) is a first Path Switch Request message (212a) when the handover request acknowledgment (206a, 304a, 307a) is X2-based, and the method further comprising:
receiving a first Path Switch Acknowledgement message (216a) in response to transmitting, by the proxy, the first Path Switch Request message (212a); and
forwarding, by the proxy, a second Path Switch Acknowledgement message (216b).

5. The method of claim 4, **characterized in that** further comprising:
determining whether a second Path Switch Request message (212b) is received by the proxy before a predetermined period;
releasing the proxy in response to not receiving the second Path Switch Request message (212b) within the predetermined period; and
forwarding, by the proxy, the second Path Switch Acknowledgement message (216b) in response to receiving the second Path Switch Request message (212b) within the predetermined period.

6. The method of claim 1, **characterized in that** the user-plane update notification (212a, 314a) is a first Handover Notify message (314a) when the handover request acknowledgment (206a, 304a, 307a) is S1-based, and the method further comprising:
receiving a first user equipment, named UE hereinafter, context release message (318a) in response to transmitting, by the proxy, the first Handover Notify message (314a); and
forwarding, by the proxy, a second UE context release message (318b).

7. The method of claim 6, **characterized in that** further comprising:
determining whether a second Handover Notify message (314b) is received by the proxy before a predetermined period;
releasing the proxy in response to not receiving the second Handover Notify message (314b) within the predetermined period; and
forwarding, by the proxy, the second UE context release message (318b) only if the second Handover Notify message (314b) is received, by the proxy, within the predetermined period.

8. The method of claim 1, **characterized in that** further comprising:
receiving a handover request message (204a) destined toward a network to initiate a handover procedure.

9. A network controller (11) comprising:
a transmitter (1402);
a receiver (1403); and
a processor (1401) coupled to the transmitter (1402) and the receiver (1403) and **characterized in that** the processor (1401) is configured at least to:
receive, by the receiver (1403), a handover request acknowledgment (206a, 304a, 307a);
transmit, by the transmitter (1402) and before receiving a handover execution complete notification message (211, 313) which corresponds to the handover request acknowledgement (206a, 304a, 307a), a user-plane update notification (212a, 314a) in response to receiving the handover request acknowledgment (206a, 304a, 307a); and
transmit, via the transmitter (1402), a user-plane update complete notification (216b, 318b) after transmitting the user-plane update notification (212a, 314a).

10. The network controller of claim 9, **characterized in that** the processor (1401) is further configured to:
establish a proxy that receives the handover request acknowledgment (206a,304a,307a) so as to transmit the user-plane update notification (212a, 314a) before receiving the handover execution complete notification message (211, 313) and receives a user-plane update acknowledgement (216a, 318a) in response to transmitting the user-plane update notification (212a, 314a).

11. The network controller of claim 10, **characterized in that** the processor (1401) is configured to transmit, via the transmitter (1402) and before receiving the handover execution complete notification message (211, 313) which corresponds to the handover request acknowledgement (206a, 304a, 307a), the user-plane update notification (212a, 314a) comprising:
transmit, by the transmitter (1402), the handover notification during a user plan update stage before receiving, by the proxy, the handover execution complete notification message (211, 313) that occurs during a handover execution stage, wherein the user plan update stage and the handover execute stage overlaps partially in time.

12. The network controller of claim 9, **characterized in that** the user-plane update notification (212a, 314a) is a first Path Switch Request message (212a) when the handover request acknowledgment (206a, 304a, 307a) is X2-based, and the processor (1401) is further configured to:
receive, by the receiver (1403), a first Path Switch Acknowledgement message (216a) in response to transmitting, by the proxy, the first Path Switch Request message (212a); and
transmit, by the transmitter (1402), a second Path Switch Acknowledgement message (216b).

13. The network controller of claim 12, **characterized in that** the processor (1401) is further configured to:
determine whether a second Path Switch Request message (212b) is received by the proxy before a predetermined period;
release the proxy in response to not receiving the second Path Switch Request message (212b) within the predetermined period; and
transmit, by the transmitter (1402), the second Path Switch Acknowledgement message (216b) in response to receiving the second Path Switch Request message (212b) within the predetermined period.

14. The network controller of claim 9, **characterized in that** the user-plane update notification (212a, 314a) is a first Handover Notify message (314a) when the handover request acknowledgment (206a,304a,307a) is S1-based, and the processor (1401) is further configured to:
receive, by the receiver (1403), a first user equipment, named UE hereinafter, context release message (318a) in response to transmitting, by the proxy, the first Handover Notify message (314a); and
transmit, by the transmitter (1402), a second UE context release message (318b).

15. The network controller of claim 14, **characterized in that** the processor (1401) is further configured to:
determine whether a second Handover Notify message (314b) is received by the proxy before a predetermined period;
release the proxy in response to not receiving the second Handover Notify message (314b) within the predetermined period; and
transmit, by transmitter (1402), the second UE context release message (318b) only if the second Handover Notify message (314b) is received, by the proxy, within the predetermined period.
